Europäisches Patentamt

European Patent Office

Office européen des brevets

(11) Veröffentlichungsnummer: 0 218 960

A2

(12) EUROPÄISCHE PATENTANMELDUNG

(21) Anmeldenummer: 86113116.7

(22) Anmeldetag: 24.09.86

(51) Int. Cl.⁴: B01D 11/02

(30) Priorität: 15.10.85 DE 3536622

(43) Veröffentlichungstag der Anmeldung:
22.04.87 Patentblatt 87/17

(84) Benannte Vertragsstaaten:
AT BE CH FR GB IT LI NL

(71) Anmelder: Fried. Krupp Gesellschaft mit
beschränkter Haftung
Altendorfer Strasse 103
D-4300 Essen 1(DE)

(72) Erfinder: Coenen, Hubert, Dr.
Wortbergrode 13
D-4300 Essen 1(DE)
Erfinder: Reimann, Klaus
Ernst-Tengelmann-Ring 1c
D-4300 Essen 15(DE)
Erfinder: Hagen, Rainer
Bottroper Weg 14
D-1000 Berlin 27(DE)

(54) Verfahren und Vorrichtung zur Gewinnung fester Stoffe aus flüssigen Stoffgemischen.

(57) Es wird ein Verfahren zur Gewinnung fester Stoffe aus flüssigen Stoffgemischen beschrieben, bei dem die im Stoffgemisch enthaltenen flüssigen Substanzen durch Gegenstromextraktion mit einem Lösungsmittel abgetrennt werden, das sich während der Extraktion im flüssgen oder überkritischen Zustand befindet und unter Normalbedingungen gasförmig ist. Bei diesem Verfahren ist vorgesehen, daß das Lösungsmittel einem zylindrischen Extraktionsraum an seiner untersten Stelle durch Düsen zugeführt wird, wobei das Lösungsmittel die Düsen mit einer Reynoldszahl von >40000 verläßt und im Extraktionsraum mit einer Reynoldszahl von 2700 bis 8000 aufwärts strömt. Ferner wird eine Vorrichtung zur Durchführung dieses Verfahrens beschrieben.

FIG. 1

EP 0 218 960 A2

## Verfahren und Vorrichtung zur Gewinnung fester Stoffe aus flüssigen Stoffgemischen

Die Erfindung bezieht sich auf ein Verfahren zur Gewinnung gelöster fester Stoffe aus flüssigen Stoffgemischen, bei dem die im Stoffgemisch enthaltenen flüssigen Substanzen durch Gegenstromextraktion mit einem Lösungsmittel, das sich während der Extraktion im flüssgen oder überkritischen Zustand befindet und unter Normalbedingungen gasförmig ist, von den festen Stoffen abgetrennt werden, bei dem die mit den flüssigen Substanzen beladene Lösungsmittelphase abgeführt sowie anschließend durch Druckerniedrigung und/oder Temperaturänderung in ihre Bestandteile zerlegt wird und bei dem das Lösungsmittel in die Extraktionsstufe zurückgeführt wird. Die Erfindung bezieht sich ferner auf eine Vorrichtung zur Durchführung dieses Verfahrens.

Ein Verfahren der eingangs genannten Art ist aus der DE-OS 3 229 041 bekannt. Dort wird ein Prozeß zur Gewinnung von Lecithin aus den bei der Herstellung pflanzlicher Fette und Öle anfallenden Schleimstoffen durch Extraktion mit einem unter Normalbedingungen gasförmigen Lösungsmittel vorgeschlagen. Bei diesem Prozeß werden die Schleimstoffe bei einem Druck von 2 $^{\times}$ $p_k$ bis 500 bar sowie einer Temperatur von 0 °C bis < $T_k$ während 15 bis 60 Minuten extrahiert, danach wird die beladene komprimierte Lösungsmittelphase vom unlöslichen Lecithin abgetrennt, anschließend werden aus der beladenen komprimierten Lösungsmittelphase die extrahierten Stoffe abgeschieden, das gasförmige Lösungsmittel wird in die Extraktionsstufe zurückgeführt und das Lecithin wird nach der Entnahme aus der Extraktionsstufe durch Verdampfen des Lösungsmittels in fester Form gewonnen ($p_k$ = kritischer Druck des Lösungsmittels; $T_k$ = kritische Temperatur des Lösungsmittels; Normalbedingungen = 0 °C, 1 bar). Als gasförmiges Lösungsmittel wird Kohlendioxid, Äthan und/oder Äthen oder eine Mischung aus einem oder mehreren dieser Gase mit Methan, Propan und/oder Propen verwendet. Bei diesem Verfahren ist es schwierig, den festen Stoff - (Lecithin) reproduzierbar in Form eines Pulvers zu gewinnen, denn bei einigen Chargen fiel der feste Stoff in Blöcken oder großen Brocken an, wodurch die Produktqualität nachteilig beeinflußt wurde.

Der Erfindung liegt daher die Aufgabe zugrunde, das Verfahren der eingangs genannten Art so weiterzubilden, daß die aus den flüssigen Stoffgemischen zu gewinnenden festen Stoffe immer als Pulver anfallen. Außerdem liegt der Erfindung die Aufgabe zugrunde, eine Vorrichtung zur Durchführung des Verfahrens zu schaffen, die eine betriebssichere Verfahrensführung ermöglicht.

Die der Erfindung zugrundeliegende Aufgabe wird dadurch gelöst, daß das Lösungsmittel einem zylindrischen Extraktionsraum an seiner untersten Stelle durch Düsen zugeführt wird, wobei das Lösungsmittel die Düsen mit einer Reynoldszahl von >40000 verläßt und im Extraktionsraum mit einer Reynoldszahl von 2700 bis 8000 aufwärts strömt. Es hat sich nämlich gezeigt, daß die zu gewinnenden Feststoffe nur dann als Pulver anfallen, wenn im Extraktionsraum ein definierter Strömungszustand aufrechterhalten wird, der im Grenzbereich zwischen laminarer und turbulenter Strömung liegt. Dieser Strömungszustand kann nur dann realisiert werden, wenn das Lösungsmittel dem Extraktionsraum im hochturbulenten Zustand zugeführt wird.

Nach der Erfindung ist ferner vorgesehen, daß im flüssigen Stoffgemisch 5 bis 75% feste Stoffe gelöst sind und daß der auf die Querschnittsfläche des Extraktionsraums bezogene Massenstrom des zugeführten flüssigen Stoffgemisches bei 140 bis 170 kg/m²•h liegt. Bei Einhaltung des Massenstroms und des Feststoffgehalts im Stoffgemisch wird bei wirtschaftlicher Verfahrensführung ein pulverförmiger Feststoff erzeugt. Das erfindungsgemäße Verfahren kann besonders erfolgreich durchgeführt werden, wenn ein flüssiges Stoffgemisch verwendet wird, welches aus 50 bis 70% Lecithin und Rest pflanzlichem Öl besteht.

Die der Erfindung zugrundeliegende Aufgabe wird ferner durch die Schaffung einer Vorrichtung zur Durchführung des Verfahrens gelöst, bei welcher der Extraktionsbehälter die Form eines Zylinders mit einem Durchmesser-Höhen-Verhältnis von 1:5 bis 1:10 hat und bei welcher die der Lösungsmittelzufuhr dienenden Düsen unmittelbar am Boden des Extraktionsbehälters angeordnet sind. Die Verwendung eines schlanken, zylindrischen Extraktionsbehälters ohne Einbauten führt im Zusammenwirken mit den unmittelbar am Boden des Extraktionsbehälters angeordneten Düsen dazu, daß der erfindungsgemäße Strömungszustand sicher eingehalten wird.

Nach der Erfindung ist weiter vorgesehen, daß als Düsen Bohrungen verwendet werden, die in mindestens einem auf dem Boden des Extraktionsbehälters befestigten Rohrring radial angeordnet sind, wobei die Achsen der radialen Bohrungen mit der Achse des Extraktionsbehälters einen Winkel von 0 bis 60° bilden. Alternativ hierzu ist nach der Erfindung vorgesehen, daß als Düsen Bohrungen verwendet werden, die in einer auf dem Boden des Extraktionsbehälters befestigten Platte angeordnet sind, wobei die Achsen der Bohrungen zur Achse des Extraktionsbehälters parallel verlaufen. Die beiden Anordnungen ermöglichen eine gleichmäßige Verteilung des Lösungsmittels im Extraktionsbehälter.

Der Gegenstand der Erfindung wird nachfolgend anhand der Zeichnung und eines Ausführungsbeispiels näher erläutert.

Es zeigen:

Fig. 1 Verfahrensfließbild,

Fig. 2a, 2b Boden des Extraktionsbehälters mit Rohrring und Düsen (Draufsicht und Querschnitt),

Fig. 3a, 3b Boden des Extraktionsbehälters mit Platte und Düsen (Draufsicht und Querschnitt).

Im Vorratstank 10 befindet sich das flüssige Stoffgemisch, das dem Extraktionsbehälter 1 über die Leitung 11 kopfseitig zugeführt wird. Der Extraktionsbehälter 1 hat keine den Stoffaustausch fördernden Einbauten und ist als Zylinder mit einem Durchmesser-Höhen-Verhältnis von 1:5 bis 1:10 gestaltet. Am Boden 2 des Extraktionsbehälters 1 sind Düsen angeordnet, durch die das Lösungsmittel in den Extraktionsbehälter 1 eingebracht und dem flüssigen Stoffgemisch entgegengeführt wird. Am Kopf des Extraktionsbehälters 1 wird die mit den flüssigen Substanzen beladene Lösungsmittelphase über die Leitung 12 abgeführt, im Ventil 13 entspannt, im Wärmeaustauscher 14 erwärmt und über die Leitung 15 in den Abscheider 3 gefördert, wo die flüssigen Substanzen ausfallen und über die Leitung 16 abgezogen werden.

Das im Abscheider 3 anfallende gasförmige Lösungsmittel gelangt über die Leitung 17 in den Kompressor 4 und danach über die Leitung 20 in den Wärmeaustauscher 5. In diesen Apparaten erfolgt die Verflüssigung des Lösungsmittels und die Einstellung des Extraktionsdrucks sowie der Extraktionstemperatur. Lösungsmittelverluste werden dadurch ausgeglichen, daß eine bestimmte Lösungsmittelmenge aus dem Vorratstank 18 über die Leitung 19 in die Leitung 17 gefördert wird. Das im flüssigen oder überkritischen Zustand befindliche Lösungsmittel wird dem Extraktionsbehälter 1 über die Leitung 21 zugeführt. Nachdem die flüssigen Substanzen aus dem Stoffgemisch extrahiert sind, wird der mit dem Lösungsmittel vermischte Feststoff aus dem Extraktionsbehälter 1 über die Leitung 22 in den Behälter 23 gefördert, wo das restliche Lösungsmittel verdampft und über die Leitung 25 in den Vorratstank 18 gelangt. Der pulverförmige Feststoff wird dem Behälter 23 über die Leitung 24 entnommen.

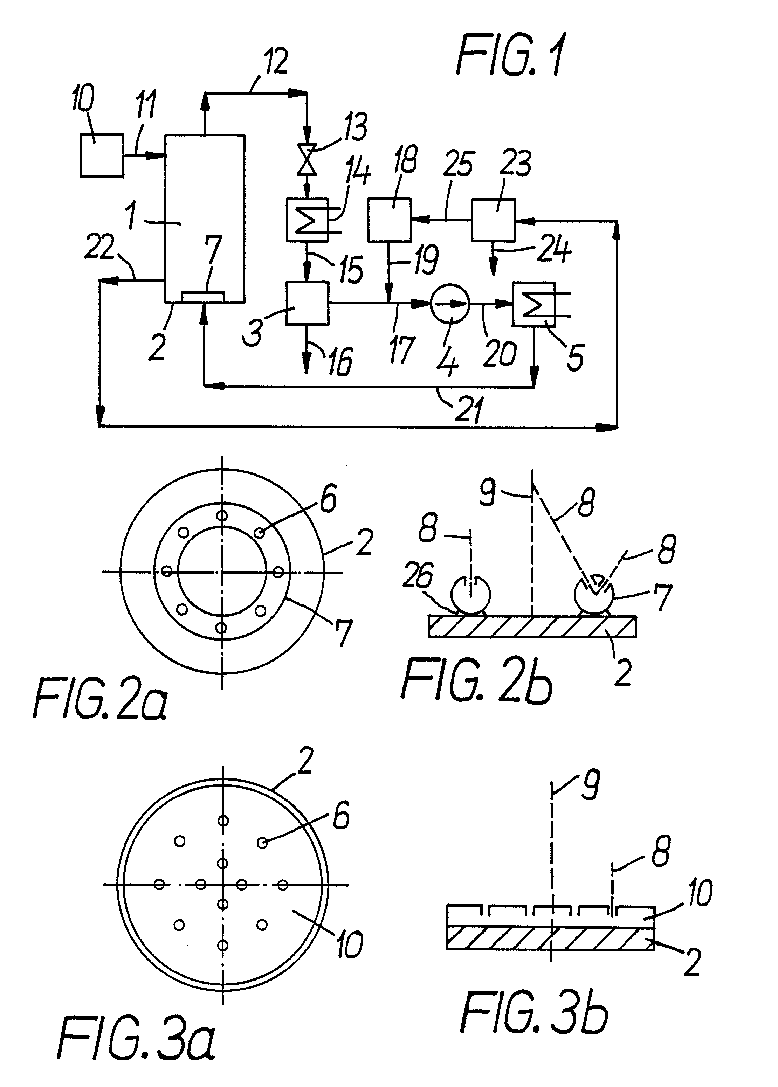

Das Lösungsmittel wird in den Extraktionsbehälter 1 durch Düsen 6 eingebracht, die unmittelbar am Boden 2 des Extraktionsbehälters 1 angeordnet sind. Als Düsen 6 sind Bohrungen geeignet, die in einem Rohrring 7 angeordnet sind, wobei das Lösungsmittel aus den Düsen 6 nach oben austritt und wobei die Achsen 8 der Bohrungen mit der Achse 9 des Extraktionsbehälters 1 einen Winkel von 0 bis 60° bilden. Die Bohrungen können im Extraktionsbehälter 1 sowohl nach außen wie nach innen gerichtet angeordnet sein, wie dies in Fig. 2b gezeigt ist. Anstelle des Rohrringes 7 kann auch eine unmittelbar auf dem Boden 2 angeordnete Platte 10 verwendet werden, in der die als Düsen 6 wirkenden Bohrungen so angeordnet sind, daß die Achsen 8 der Bohrungen parallel zur Achse 9 des Extraktionsbehälters 1 verlaufen. Durch beide Düsenanordnungen wird eine gleichmäßige Verteilung des Lösungsmittels über den Querschnitt des Extraktionsbehälters erreicht, woraus eine gute Extraktionsleistung resultiert. Der Rohrring 7 wird durch Halterungen 26 auf dem Boden 2 des Extraktionsbehälters 1 befestigt. Das Lösungsmittel wird über eine in der Zeichnung nicht dargestellte Leitung in dem Rohrring 7 eingebracht. Die Platte 10 ist als Hohlkörper ausgebildet, die auf dem Boden 2 des Extraktionsbehälters 1 befestigt ist und der das Lösungsmittel über eine in der Zeichnung nicht dargestellte Leitung zugeführt wird.

Das verwendete Lösungsmittel ist bei Normalbedingungen, also bei 0 °C und 1 bar, gasförmig. Zur Extraktion eignet sich dieses Lösungsmittel dann, wenn es sich im flüssigen oder im überkritischen Zustand befindet. Der flüssige Zustand ist durch das pT-Diagramm definiert und wird dadurch erreicht, daß ein Gas abgekühlt und auf einen bestimmten Druck komprimiert wird. Der überkritische Zustand liegt dann vor, wenn das Gas einen Druck und eine Temperatur aufweist, die oberhalb des kritischen Drucks bzw. der kritischen Temperatur liegen. Als bei Normaldruck gasförmige Lösungsmittel werden zur Durchführung des erfindungsgemäßen Verfahrens vorzugsweise Kohlendioxid und niedere Kohlenwasserstoffe verwendet.

Die Reynoldszahl $Re_E$ für den Extraktionsraum ist definiert als

$$Re_E = \frac{u \cdot d}{\nu} = \frac{4\, m_g}{d \cdot \pi \cdot \eta}$$

u = Strömungsgeschwindigkeit des Extraktionsmittels im Extraktionsraum;

d = Durchmesser des zylindrischen Extraktionsraums;

$\nu$ = kinematische Zähigkeit des Extraktionsmittels;

$m_g$ = Massenstrom des Extraktionsmittels;

$\eta$ = Dynamische Viskosität des Extraktionsmittels.

Die Reynoldszahl $Re_B$ für den Bohrungsdurchmesser ist definiert als

$$Re_B = \frac{u_B \cdot d_B}{\nu} = \frac{4 m_g}{d_B \cdot \pi \cdot \eta \cdot n}$$

$u_B$ = Strömungsgeschwindigkeit des Extraktionsmittels in der Düse;

$d_B$ = Durchmesser der Düse;

$\nu$ = kinematische Zähigkeit des Extraktionsmittels;

$m_g$ = Massenstrom des Extraktionsmittels;

n = Anzahl der Düsen.

Aufgrund dieser Beziehungen besteht bei der Festlegung der Anzahl und des Durchmessers der Düsen eine gewisse Freiheit, die durch konstruktive Gesichtspunkte und die Notwendigkeit einer gleichmäßigen Gasverteilung im Extraktionsraum eingeschränkt ist. Es ist daher möglich, Anzahl und Durchmesser der Düsen in Abhängigkeit von der Größe des Extraktionsraums und der Menge des Stoffdurchsatzes in bestimmten Grenzen zu variieren.

Ausführungsbeispiel:

In einem zylindrischen, senkrecht stehenden Extraktionsraum mit einem lichten Durchmesser von 109 mm, einer Höhe von 850 mm und einem Volumen von 7,93 l wurden 700 g Rohlecithin mit einem Ölgehalt von 40 Gew.-% während einer Stunde eingebracht. Der Extraktionsraum wurde mit Kohlendioxid bei 350 bar und 60 °C sowie einem Massenstrom von 80 kg $CO_2$/h durchströmt. Als Lösungsmittelverteiler war am Boden des Extraktionsbehälters ein Rohrring mit einem Außendurchmesser von 90 mm und einem Rohrdurchmesser von 3 mm eingebaut, dessen Wand 20 Bohrungen mit einem Durchmesser von 0,3 mm trug. Die Bohrungen waren in einem Winkel zwischen 0 und 60° zur Zylinderachse geneigt, wobei die Neigung auf das Innere des Extraktionsraums gerichtet war. Dem Rohrring wurde das Lösungsmittel durch eine angeschweißte Leitung zugeführt. Die Druckdifferenz zwischen dem Inneren des Rohrrings und dem Extraktionsraum betrug 20 bar. Die mit Öl beladene Kohlendioxidphase wurde am Kopf des Extraktionsraums abgezogen, wobei das Mitreißen kleiner Lecithinpartikel durch eine Packung aus Stahlwolle verhindert wurde. Nach dem Abstellen der Rohlecithinzufuhr wurde der Lösungsmittelstrom noch eine weitere Stunde aufrechterhalten. Während der zweistündigen Extraktion wurde das extrahierte Öl aus der beladenen Lösungsmittelphase durch Entspannung auf 60 bar abgeschieden. Nach der Extraktionszeit von zwei Stunden wurde der Druck abgelassen und das entölte Lecithin dem Extraktionsraum entnommen. Es hatte eine pulverförmige Beschaffenheit, die mittlere Korngröße lag bei 50 μm und der Gehalt an Lecithin betrug 95,6 %. Das extrahierte Öl enthielt noch 1,0 % Lecithin.

Bei allen Prozentzahlen, die vorstehend genannt sind, handelt es sich um Gew.-%.

## Ansprüche

1. Verfahren zur Gewinnung gelöster fester Stoffe aus flüssigen Stoffgemischen, bei dem die im Stoffgemisch enthaltenen flüssigen Substanzen durch Gegenstromextraktion mit einem Lösungsmittel, das sich während der Extraktion im flüssigen oder überkritischen Zustand befindet und unter Normalbedingungen gasförmig ist, von den festen Stoffen abgetrennt werden, bei dem die mit den flüssigen Substanzen beladene Lösungsmittelphase abgeführt sowie anschließend durch Druckerniedrigung und/oder Temperaturänderung in ihre Bestandteile zerlegt wird und bei dem das Lösungsmittel in die Extraktionsstufe zurückgeführt wird, **dadurch gekennzeichnet,** daß das Lösungsmittel einem zylindrischen Extraktionsraum an seiner untersten Stelle durch Düsen zugeführt wird, wobei das Lösungsmittel die Düsen mit einer Reynoldszahl von >40000 verläßt und im Extraktionsraum mit einer Reynoldszahl von 2700 bis 8000 aufwärts strömt.

2. Verfahren nach Anspruch 1, dadurch gekennzeichnet, daß im flüssigen Stoffgemisch 5 bis 75% feste Stoffe gelöst sind und daß der auf die Querschnittsfläche des Extraktionsraums bezogene Massenstrom des zugeführten flüssigen Stoffgemischs bei 140 bis 170 kg/m²•h liegt.

3. Verfahren nach den Ansprüchen 1 bis 2, dadurch gekennzeichnet, daß ein flüssiges Stoffgemisch verwendet wird, welches aus 50 bis 70% Lecithin und Rest pflanzlichem Öl besteht.

4. Vorrichtung zur Durchführung des Verfahrens nach den Ansprüchen 1 bis 3, die aus einem druckfesten Extraktionsbehälter (1), mindestens einem Abscheider (3) sowie einem Kompressor (4) und einem Wärmeaustauscher (5) zur Kreislaufführung des Lösungsmittels besteht, dadurch gekennzeichnet, daß der Extraktionsbehälter (1) die Form eines Zylinders mit einem Durchmesser-Höhen-Verhältnis von 1:5 bis 1:10 hat und daß die der Lösungsmittelzufuhr dienenden Düsen (6) unmittelbar am Boden (2) des Extraktionsbehälters - (1) angeordnet sind.

5. Vorrichtung nach Anspruch 4, dadurch gekennzeichnet, daß als Düsen (6) Bohrungen verwendet werden, die in mindestens einem auf dem Boden (2) des Extraktionsbehälters (1) befestigten Rohrring (7) radial angeordnet sind, wobei die Achsen (8) der radialen Bohrungen mit der Achse (9) des Extraktionsbehälters (1) einen Winkel von 0 bis 60° bilden.

6. Vorrichtung nach Anspruch 4, dadurch gekennzeichnet, daß als Düsen (6) Bohrungen verwendet werden, die in einer auf dem Boden (2) des Extraktionsbehälters (1) befestigten Platte (10) angeordnet sind, wobei die Achsen (8) der Bohrungen zur Achse (9) des Extraktionsbehälters (1) parallel verlaufen.

0 218 960

FIG.1

FIG.2a

FIG. 2b

FIG.3a

FIG.3b